# EUROPEAN PATENT APPLICATION

(11) **EP 0 633 650 A1**
(43) Date of publication of application: **11.01.1995**
(21) Application number: 94109686.9
(22) Date of filing: 23.06.1994
(51) Int. Cl.: H02K 21/18, H02K 7/14

(54) **Synchronous electric motor**

(30) Priority: 08.07.1993 IT VI930118
(71) Applicant: HYDOR S.r.l., I-36061 Bassano del Grappa (VI) (IT)
(72) Inventor: Bresolin, Valerio, I-36020 Pove Del Grappa (Vicenza) (IT)
(74) Representative: Forattini, Amelia

(57) **Abstract**

A synchronous electric motor particularly for small users includes a rotor (7) arranged in a stator unit that has a mainly axial extension. The stator unit includes two polar bodies (3, 4) which are substantially laminar and are fixed to an intermediate body (5) that supports an electric coil (6) with circular turns (17). The motor can be used to drive centrifugal micro-pumps that have a predominantly axial extension, minimizing their bulk and weight.

## Description

The present invention relates to a synchronous electric motor for small tools and devices such as for example micro-pumps for aquariums, which includes a central supporting body for an electric coil and two substantially laminar stator poles between which a rotor with high magnetic retentivity is rotatably inserted. The invention equally relates to a series of submersible centrifugal micro-pumps driven by these motors.

The basic components of conventional synchronous motors are a stator, or fixed part, which supports two coils, or electric windings, for generating the magnetic flux, and a rotor, generally of the permanent-magnet type.

The stator is generally formed by a pack of ferromagnetic laminations which are substantially U-shaped, from a top plan view. The coils are respectively constituted by turns of electric wire, wound on each one of the two parallel portions of the pack of laminations. The free ends of the portions form stator poles between which the rotor is rotatably inserted so that its rotation axis is substantially at right angles to the axis of the turns of the coils.

When the conventional synchronous motors are associated with some user devices, the size of these devices is considerably increased, especially along two mutually perpendicular directions: one corresponds to the axis of the rotor and the other is substantially parallel to the axes of the stator coils.

Furthermore, due to the shape of the pack of laminations, the turns of the coils are approximately square and the mean turn length is greater than the circumference inscribed in the mean turn, thereby increasing the mean diameter of the stator.

Accordingly, a drawback of conventional synchronous electric motors is their relatively large bulk which prevents their use in devices which, due to functional or aesthetic reasons, must have small dimensions and/or slender shapes, such as for example submersible micro-pumps which are suitable for insertion in small openings of jerry-cans and the like.

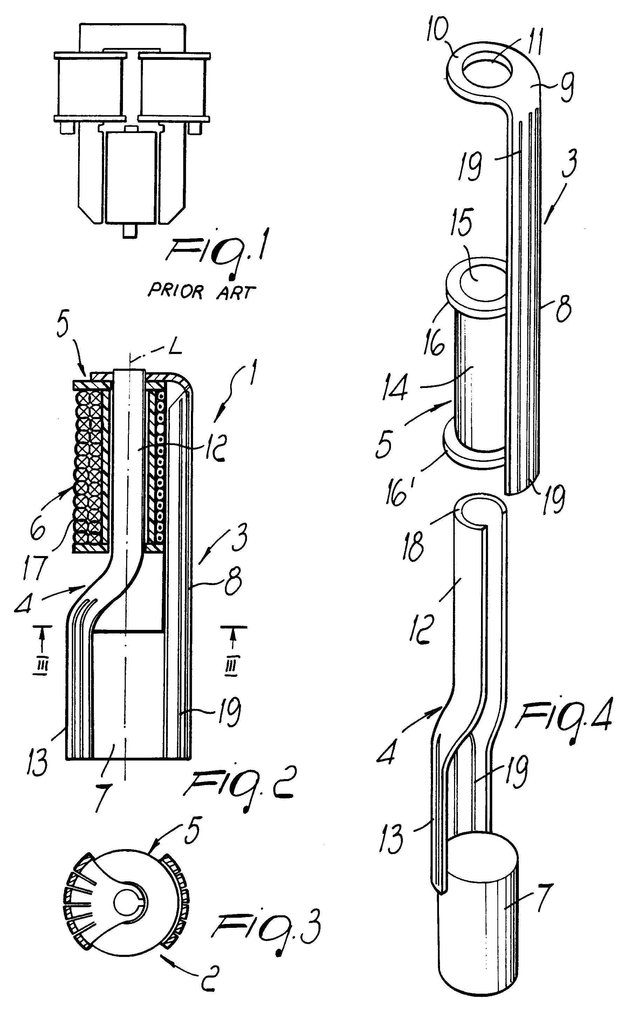

In order to obviate this drawback, a synchronous electric motor has been devised and described in the European Patent application No. 93118888.2 dated November 24, 1993, in the name of this same Applicant. This motor is schematically shown in Figure 1, of the present application wherein the rotor R has a rotation axis that is substantially parallel to the longitudinal axis of the coils B.

With this configuration there is a considerable reduction in dimensions along at least one of the three perpendicular directions of space, but the mean diameter of the stator cannot be reduced below a certain limit set by the presence of the two coils, which have turns that have an approximately square plan shape.

Another drawback of conventional synchronous electric motors is their considerable weight, which is mainly due to the bulky ferromagnetic lamination pack.

Another drawback of conventional motors is the relatively large number of parts, which also entails higher manufacturing and assembly costs.

The aim of the invention is to eliminate the drawbacks described above by providing a synchronous electric motor particularly for small-size user devices, such as for example micro-pumps for ornamental aquariums, that has an extremely small bulk and a predominantly axial extension.

An object of the invention is to provide a synchronous electric motor which, power for power, is much lighter than known motors.

Another object is to provide a motor which is constituted by a minimum number of components, can be easily assembled and has a low cost.

Another object is to provide a submersible micro-pump, particularly for aquariums, which has a slender shape with a predominantly axial extension and is characterized by extremely low weight, low cost, and constructive simplicity.

This aim, these objects and others which will become apparent hereinafter are achieved by a synchronous electric motor, particularly for small user devices, comprising a rotor arranged in a stator unit having a predominantly axial extension, characterized in that said stator unit comprises two substantially laminar polar bodies which are appropriately shaped and are fixed to an intermediate body adapted to support said stator winding.

Preferably, the stator winding is constituted by a single coil that has turns which have a substantially circular plan shape.

This solution eliminates the bulky and relatively heavy lamination pack and simultaneously reduces the dimensions and weight of the winding.

The portion of the surface of the laminar polar bodies that faces the rotor is shaped so as to substantially follow the curvature of the rotor. Furthermore, the polar bodies have multiple longitudinal slits adapted to reduce counterelectromotive forces.

According to a further aspect of the invention, a submersible centrifugal micro-pump, particularly for ornamental aquariums and fountains, is characterized in that it is driven by a synchronous electric motor according to the invention and in that it includes a pump body that has an approximately cylindrical shape with an inlet and an outlet and can be coupled coaxially and rotatably to one end of a cylindrical casing that contains the motor, a flow-rate adjustment means being built into the pump body and being meant to cooperate with a corresponding means provided on the casing.

The flow-rate adjustment means can be constituted by multiple first openings formed on the pump body proximate to the portion for coupling to the casing, on which there are second openings that can be aligned with respect to the first ones by means of the relative rotation of the casing with respect to the pump body.

Further characteristics and advantages will become apparent from the detailed description of some preferred but not exclusive embodiments of the motor and of the pumps according to the invention, illustrated, by way of non-limitative example, in the accompanying drawings, wherein:
Figure 1 is a schematic side view of a synchronous electric motor of the prior art;
Figure 2 is a partially sectional side view, taken along an axial plane, of a synchronous electric motor according to the invention;
Figure 3 is a sectional bottom view of the motor, according to the plane III-III of Figure 2;
Figure 4 is an exploded perspective view of the stator of the motor of Figure 2;
Figure 5 is a schematic front view of a micro-pump according to the invention which includes the motor of Figure 2;
Figure 6 is a partially sectional front view of the micro-pump of Figure 5, taken along an axial plane;
Figure 7 is a front view of an alternative embodiment of a micro-pump according to the invention which includes the motor of Figure 2.

With reference to the above figures, the motor according to the invention, generally designated by the reference numeral 1, includes a stator unit, or stator, 2 that has a substantially axial extension, having an axis L. The stator 2 is generically formed by two substantially laminar polar bodies 3 and 4 which are connected to an intermediate part 5 that supports a winding or electric coil 6. The stator can be coupled to a rotor 7 which has a substantially longitudinal rotation axis.

In particular, the first polar body 3 is formed with a strip of metal plate that has an elongated shape, and a thickness of 1 to 3 mm. The metal strip includes a longitudinal portion 8 which, in a transverse cross-section, has substantially the shape of a circular arc whose diameter is slightly larger than the diameter of the rotor 7. The longitudinal portion is connected, at one end 9, to a flat transverse portion 10 which is approximately circular and has a central hole 11.

The second polar body 4, obtained from a strip of metal that is similar to the first one but is shaped differently, is generally formed by an open cylindrical portion 12 which is connected to an enlarged portion 13. Portion 13 is slightly axially staggered and is similar to the longitudinal portion 8 of the body 3 but is shorter.

The intermediate part 5 is made of non-ferromagnetic material and is shaped approximately like a spool. The intermediate part 5 includes a cylindrical portion 14 with an axial hole 15 and two flanges 16, 16' at its ends.

The electric coil 6, which generates the magnetic flux, is wound with substantially circular turns 17 about the cylindrical portion of the intermediate part 5 between the flanges 16, 16'.

In the assembled stator unit, the transverse portion 10 of the first polar body, faces one of the flanges 16 of the intermediate part 5, so as to center the respective holes 11, 15 on the axis L. The longitudinal portion 8 of the first polar body extends towards the opposite flange 16' of the intermediate part 5 so as to be parallel to it. In the second polar body 4, the cylindrical portion 12 is inserted in the hole 15 of the intermediate part 5 at the end where the flange 16' is located, until the cylindrical portion protrudes from the opposite end, so that the end 18 is stably inserted in the hole 11 of the first polar body 3. The two polar bodies 3 and 4 are mutually connected mechanically and electrically.

The enlarged portion 13 of the second polar body 4 is arranged longitudinally, opposite to the longitudinal portion 8 of the first polar body 3 which faces it, forming a pair of poles between which the rotor is inserted, so that its axis is substantially longitudinal and preferably coaxial to L.

Both the longitudinal portion 8 of the first polar body 3 and the enlarged portion of the second polar body 4 have a plurality of longitudinal slits 19 which are suitable to reduce counterelectromotive forces, improving the pickup and overall efficiency of the motor 1.

According to its applications, the motor 1 may have its stator 3 embedded in epoxy resins, or other dielectric material, in order to perfectly insulate the live parts.

From what has been described above, it is evident that a synchronous electric motor according to the invention achieves the intended aim and objects. In particular, there is a considerable reduction in weight and dimensions with respect to conventional similar motors, increasing its field of application. Furthermore, its constructive simplicity and the limited number of parts allow considerable saving both for production and for assembly.

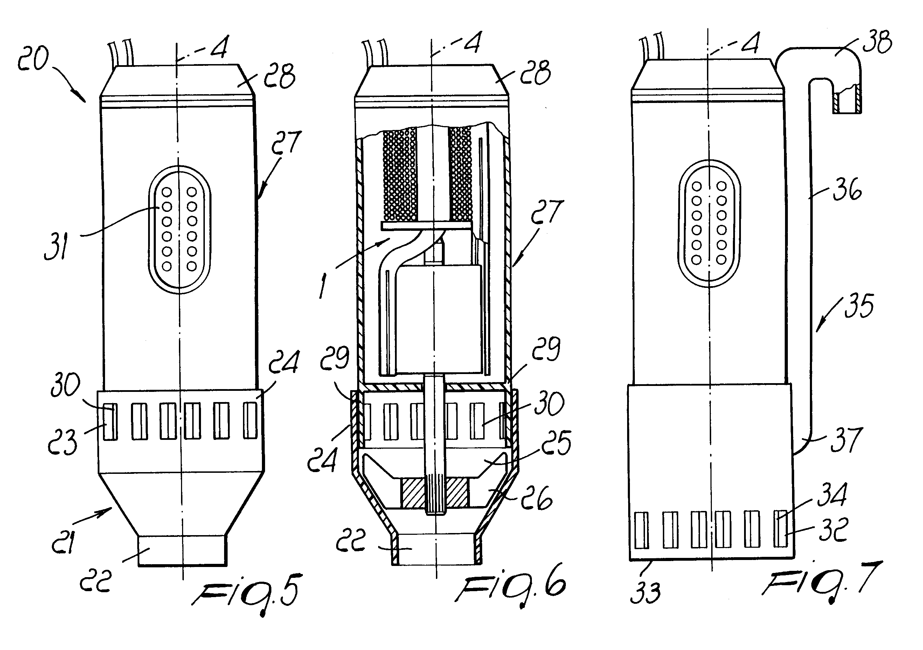

The above described motor can be used as a drive unit to actuate centrifugal micro-pumps, shown in Figures 5 to 7 and described in detail hereinafter.

Figures 5 and 6 illustrate a first embodiment of a submersible centrifugal micro-pump 20 that has a mainly axial extension with an axis A. The micro-pump 20 includes a pump body 21 that is approximately funnel-shaped with an inlet at the end which has the smallest diameter. Multiple first outlets 23 are arranged circumferentially on the portion at the end 24, which has the largest diameter, which internally forms a pressure chamber 25. An impeller 26 is arranged in the pressure chamber 25.

The pump body 21 is coaxially and rotatably coupled to a cylindrical casing 27 that contains the motor 1 on the rotor axis of which the impeller 26 is keyed. The casing 27 is closed at one end by a lid 28 and has, at its opposite end, a portion 29 which is coaxially and rotatably coupled to the portion 24 of the pump body 21.

The portion 29 is circumferentially provided with multiple second outlets 30 that can be aligned with respect to the first ones 23 provided on the pump body in order to vary the useful passage section of the liquid, consequently varying the flow-rate of the micro-pump.

In order to adjust the flow-rate of the micro-pump 20, the user must rotate the casing 27 about its own axis with respect to the pump body 21, thus varying the useful passage section of the outgoing liquid and consequently the flow-rate of the micro-pump.

For example, by setting the micro-pump to the maximum flow-rate, the openings 23 of the pump body 21 are perfectly aligned and coincide with the openings 30 provided on the casing 27. In this case the maximum useful passage section is obtained.

Both the casing and the pump body are preferably made of plastic. The motor inserted in the casing may be embedded beforehand in a layer of dielectric plastic material to ensure perfect insulation. In the upper part of the casing there is a sealed switch 31 for the control of the micro-pump.

Figure 7 illustrates a second embodiment of the micro-pump according to the invention, which is similar to the first one and includes a flow-rate adjustment means which is substantially equivalent to those of the first embodiment but is arranged at the inlet of the liquid.

In particular, in the second embodiment the pump body, which has a cylindrical shape, includes multiple inlets 32 which are arranged circumferentially proximate to the base 33 and can be aligned with corresponding openings 34 provided on the casing in order to vary the useful passage section of the liquid, adjusting the flow-rate of the micro-pump.

These openings 32, 34 are aligned as in the first embodiment described above, i.e. by rotating the casing coaxially with respect to the pump body. The inlets 32, 34 furthermore form a grille for filtering the aspirated liquid.

The pumped liquid flows out through a duct 35 which is formed by a longitudinal portion 36 the axis of which is substantially parallel to the axis A. The longitudinal portion is connected, at one end 37, to the outlet of the pump body, and at the opposite end there is an end portion 38 which is curved so as to form a part for anchoring to a side wall of a container, not shown in the figures, in which the micro-pump is immersed.

A series of submersible micro-pumps driven by synchronous motors according to the invention, particularly suitable for various uses, is extremely simplified, since the micro-pumps are manufactured by assembling a very small number of parts. This meets the current requirements of the market and also provides considerable savings in production.

The very small dimensions and slender shape allow to insert the micro-pump in small-diameter openings, facilitating its concealment if the pump is aesthetically undesirable.

The synchronous electric motor and the submersible micro-pump according to the invention are susceptible to numerous modifications and variations, all of which are within the scope of the inventive concept expressed in the accompanying claims and are considered to be equally protected. All the details may be replaced with technically equivalent parts; the materials may be different according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Synchronous electric motor, comprising a rotor (7) arranged in a stator unit (2) having a predominantly axial extension and a winding, characterized in that said stator unit (2) is generally formed by two substantially laminar polar bodies (3, 4) which are appropriately shaped and are fixed to an intermediate body (5) adapted to support the stator winding.

2. Synchronous electric motor according to claim 1, characterized in that the stator winding is constituted by a single coil (6) with substantially circular turns (17).

3. Electric motor according to claim 1, characterized in that respective portions (8, 13) of the surfaces that face the rotor (7) of said laminar polar bodies (3, 4) are shaped so as to substantially follow the curvature of said rotor.

4. Electric motor according to claim 1, characterized in that the laminar polar bodies (3, 4) have, at least proximate to the rotor (7), multiple longitudinal slits (19) which are suitable to reduce counterelectromotive forces.

5. Electric motor according to claim 1, characterized in that said intermediate part (5) is a substantially cylindrical body made of non-ferromagnetic material, with an axial hole (15) and two flanges (16, 16') at the opposite ends to contain the electric coil (6).

6. Synchronous electric motor according to claim 1 or 5, characterized in that the first one of said laminar polar bodies (3) has a longitudinal portion (8) which is shaped like a circular arc in cross-section and is connected to an approximately circular transverse portion (10) which has a central hole (11) and faces a flange (16) of the intermediate part (5).

7. Synchronous electric motor according to claim 1 or 5, characterized in that the second one of said polar bodies (4) has a substantially cylindrical upper portion (12) which is inserted in a hole (15) of the intermediate part (5) and is connected to an enlarged portion (13) which is slightly axially staggered and is similar in shape to the longitudinal portion (8) of said first body (3).

8. Synchronous electric motor according to claim 6 or 7, characterized in that said first and second bodies (3, 4) are joined at a respective end (10, 18), the portions (8, 13) at the free ends being substantially mutually parallel and opposite.

9. Submersible centrifugal micro-pump (20) particularly for ornamental fountains and aquariums, driven by a synchronous electric motor according to one or more of claims 1 to 8, characterized in that it comprises an approximately cylindrical pump body (21) with an axis A, an inlet (22) and an outlet (23), said pump body internally comprising a pressure chamber (25) which accommodates an impeller (26) which can be coaxially and rotatably coupled to a cylindrical casing (27) that contains the motor (1), a flow-rate adjustment means being built into the pump body (21) and cooperating with a corresponding means provided on the casing (27).

10. Submersible centrifugal micro-pump according to claim 9, characterized in that said flow-rate adjustment means comprises multiple first openings (23) on the pump body (21) proximate to the portion (24) for coupling to the casing (27), second openings (30) that can be aligned with the first openings (23) being formed on said casing.

11. Submersible centrifugal micro-pump according to claim 10, characterized in that said casing (27) and said pump body (21) can rotate with respect to each other to vary the useful passage section of the first openings (23) with respect to the second ones (30).

12. Submersible centrifugal micro-pump according to claim 10, characterized in that said openings (23, 30) are arranged circumferentially proximate to the portion (29) for connecting the casing (27) to the pump body (21).

13. Submersible centrifugal micro-pump according to claim 10, characterized in that said openings are arranged circumferentially at the base (33) of the pump body.

14. Submersible centrifugal micro-pump according to claim 9, characterized in that it has a duct (35) which is formed by a longitudinal portion (36) with an axis that is substantially parallel to the axis A, said portion being connected at one end (37) to the outlet of the pump body, an end portion (38) being provided at the opposite end and being curved so as to form a part for anchoring to a side wall of a container in which the micro-pump is immersed.
